# FASCICULE DE BREVET EUROPEEN

(11) **EP 0 815 635 B1**
(45) Date de publication et mention de la délivrance du brevet: **03.04.2002**
(21) Numéro de dépôt: 97901107.9
(22) Date de dépôt: 17.01.1997
(51) Int. Cl.: H02M 1/12

(54) **CIRCUIT D'ALIMENTATION A CONDENSATEUR DE STOCKAGE**
LEISTUNGSVERSORGUNGSSCHALTUNG MIT EINEM SPEICHERKONDENSATOR
POWER SUPPLY CIRCUIT WITH A STORAGE CAPACITOR

(30) Priorité: 19.01.1996 FR 9600810
(43) Date de publication de la demande: 07.01.1998
(73) Titulaire: STMicroelectronics S.A., 92120 Montrouge (FR)
(72) Inventeur: MOREAU, Jean-Michel, F-38100 Grenoble (FR)
(74) Mandataire: de Beaumont, Michel
(86) Numéro de dépôt international: FR9700089
(87) Numéro de publication internationale: WO9726701

(56) Documents cités:
- PATENT ABSTRACTS OF JAPAN vol. 018, no. 570 (E-1623), 31 Octobre 1994 & JP 06 209574 A (SONY CORP), 26 Juillet 1994,

## Description

La présente invention concerne les circuits d'alimentation du type à condensateur de stockage destinés à alimenter une charge par l'intermédiaire d'un circuit de régulation tel qu'un circuit à découpage.

A l'heure actuelle, de nombreux appareils alimentés électriquement à partir du secteur incluent une alimentation à découpage. L'énergie est extraite du réseau sous forme de pics de courant de courte durée. Ces pics de courant perturbent l'efficacité du réseau. Les effets dus à ces pics de courant empirent avec le nombre d'appareils connectés au réseau et incorporant une alimentation à découpage. Par suite, les compagnies de distribution électrique ont imposé diverses normes pour améliorer le facteur de puissance des alimentations.

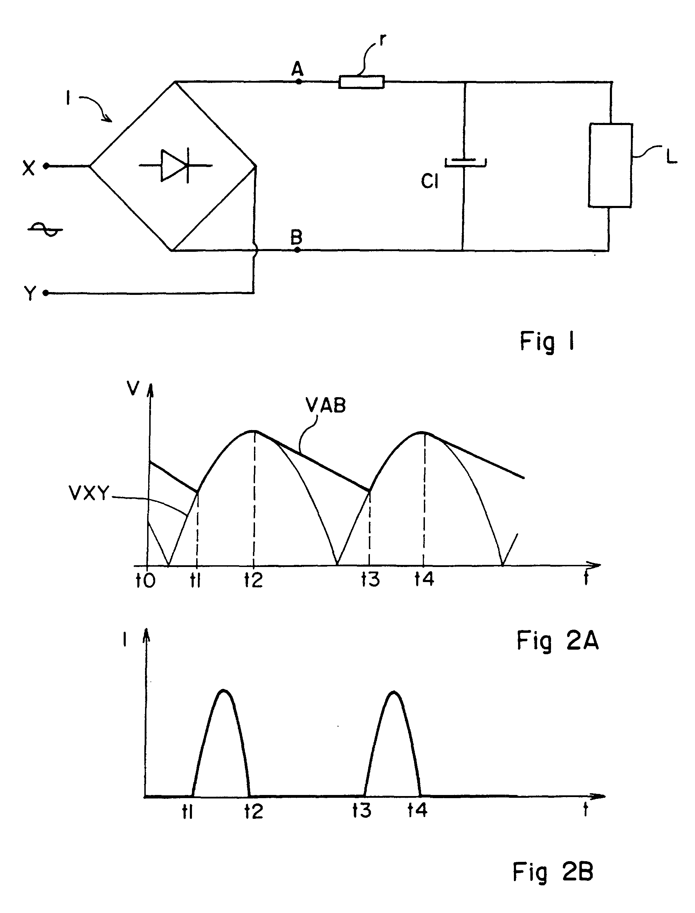

La figure 1 représente un schéma classique de fourniture d'une alimentation continue à partir du secteur. Les bornes X et Y de l'alimentation alternative sont connectées aux bornes d'entrée d'un pont redresseur 1 dont les bornes de sortie A et B sont connectées à un condensateur de stockage C1 et à une charge L. On considérera que cette charge L incorpore un circuit de régulation, par exemple une alimentation à découpage, connecté à une charge. En outre, on trouve souvent en série avec le condensateur C1 une résistance de faible valeur r destinée à limiter les appels de courant du système lors de sa mise en route.

La figure 2A représente en fonction du temps la tension du secteur V_{XY} redressée et la tension V_{AB} entre les bornes A et B (en négligeant l'effet de la résistance r). On suppose qu'à un instant initial t0, la tension aux bornes du condensateur C1 est plus élevée que la tension du secteur. Alors, la tension entre les bornes A et B correspond à la tension aux bornes du condensateur C1 qui se décharge progressivement dans la charge L. A partir de l'instant t1, la tension redressée du secteur devient supérieure à la tension aux bornes du condensateur et c'est le secteur qui assure l'alimentation de la charge L et la recharge du condensateur C1. A partir de l'instant t2, la tension sur le condensateur devient supérieure à la tension du secteur et c'est à nouveau le condensateur qui alimente la charge. Ceci se répète aux instants t3 et t4.

La figure 2B représente l'allure du courant extrait du secteur entre les instants t1-t2 et t3-t4. Étant donné que l'on trouve alors un générateur sinusoïdal alimentant une charge et un condensateur qui sont des éléments linéaires, le courant est sensiblement sinusoïdal et, plus précisément, il correspond à une crête de sinusoïde, c'est-à-dire que sa forme est sensiblement parabolique. Une caractéristique des pics de courant est donc qu'ils sont symétriques par rapport à leur maximum et que ce maximum peut être relativement élevé.

On a imaginé dans l'art antérieur divers circuits d'amélioration du facteur de puissance pour réduire et élargir ces pics de courant. Une façon simple de le faire est de limiter la valeur du condensateur C1 pour que celui-ci se décharge relativement fortement pendant chaque phase où il alimente la charge. En conséquence, l'instant t1 interviendra plus tôt dans la période et l'intervalle de temps t1-t2 sera plus élevé. D'autres circuits d'amélioration du facteur de puissance prévoient que le condensateur C1 et éventuellement d'autres condensateurs associés se chargent plus faiblement, par exemple seulement à la moitié de la tension maximum du secteur redressé. Alors, l'instant t2 intervient tardivement dans la période. Toutefois, dans les deux cas, au moins une portion du courant extrait du secteur a l'allure du pic symétrique illustré en figure 2B.

Le document JP6209574 révèle un circuit d' alimentation pour améliorer le facteur de puissance avec un circuit simple et pour améliorer la fiabilité économiquement en réduisant la perte de puissance dans une résistance.
Ce circuit comprend deux transistors bipolaires, couplés en série avec une première diode 14 pour charger le condensateur de stockage 5 et d' une deuxième diode 13 pour décharger le condensateur.

Un objet de la présente invention est de prévoir un circuit d'alimentation de charge qui limite l'amplitude et augmente l'angle de passage des pics de courant extraits du secteur.

Un autre objet de la présente invention est de prévoir un tel circuit d'alimentation dans lequel les pics de courant extraits du secteur sont dissymétriques et présentent de préférence un maximum au début de chaque pic.

La présente invention vise également à proposer un circuit d'alimentation dans lequel le courant de charge du condensateur de stockage est commandable indépendamment du type de charge alimentée.

La présente invention vise également à minimiser la consommation du circuit d'alimentation.

La présente invention vise en outre à proposer un tel circuit d'alimentation d'une charge incorporant un circuit de régulation du type alimentation à découpage, qui minimise les perturbations apportées par l'alimentation à découpage sur la tension alternative fournie au pont redresseur.

Pour atteindre ces objets, la présente invention prévoit un circuit d'alimentation à condensateur de stockage comprenant, aux bornes d'un pont redresseur, un condensateur de stockage en série avec des chemins de charge et de décharge parallèles, le chemin de charge comprenant un limiteur de courant dont la valeur de limitation est commandée par un moyen mémorisant la tension moyenne aux bornes du limiteur, d'où il résulte que le condensateur de stockage se charge, pendant chacune de ses phases de charge, à un courant sensiblement constant pendant chacune de ses phases de charge.

Selon un mode de réalisation de la présente invention, le limiteur de courant est un transistor MOS à enrichissement à canal N associé à des moyens de polarisation de grille.

Selon un mode de réalisation de la présente invention, les moyens de polarisation de grille comprennent des moyens de mémorisation d'une tension fonction de la tension entre le drain et la source du transistor MOS, la constante de temps de ces moyens de mémorisation étant longue devant la période des signaux d'entrée du pont redresseur.

Selon un mode de réalisation de la présente invention, les moyens de polarisation de grille comprennent la connexion en série, entre le drain et la source du transistor limiteur, d'un interrupteur bidirectionnel commandé à la fermeture pendant les périodes de charge, d'au moins une première résistance et d'un deuxième condensateur, le deuxième condensateur constituant lesdits moyens de mémorisation.

Selon un mode de réalisation de la présente invention, l'interrupteur est un premier transistor bipolaire de type PNP.

Selon un mode de réalisation de la présente invention, les moyens de commande de l'interrupteur comprennent une deuxième résistance connectée à la base du premier transistor bipolaire, un deuxième transistor bipolaire de type NPN connecté entre la deuxième résistance et la source du transistor limiteur, et une troisième résistance connectée entre la base du deuxième transistor bipolaire et un potentiel voisin de celui du drain du transistor limiteur.

Selon un mode de réalisation de la présente invention dans lequel une charge est connectée aux bornes de sortie du pont redresseur, le deuxième condensateur est connecté entre grille et source du transistor limiteur.

Selon un mode de réalisation de la présente invention, la première résistance est de forte valeur et est intercalée entre la grille du transistor limiteur et le collecteur du premier transistor bipolaire, une borne de la troisième résistance et l'émetteur du premier transistor bipolaire étant reliés au drain du transistor limiteur, d'où il résulte que le deuxième condensateur mémorise une tension correspondant sensiblement à la tension moyenne entre le drain et la source du transistor limiteur.

Selon un mode de réalisation de la présente invention, une première borne de la première résistance est reliée au collecteur du premier transistor bipolaire, l'émetteur du premier transistor bipolaire étant relié à une première borne du deuxième condensateur dont une deuxième borne est reliée à la source du transistor limiteur.

Selon un mode de réalisation de la présente invention, une charge est connectée aux bornes du condensateur de stockage, les moyens de polarisation de grille comprenant en outre une cinquième résistance connectée entre l'émetteur du premier transistor bipolaire et la grille du transistor limiteur, et un troisième condensateur connecté entre le drain et la grille du transistor limiteur, d'où il résulte que la grille du transistor limiteur est polarisée par une tension correspondant à la somme d'une première tension proportionnelle à la tension entre le drain et la source du transistor limiteur et d'une deuxième tension proportionnelle à la dérivée de la tension entre le drain et la source du transistor limiteur.

Selon un mode de réalisation de la présente invention, le circuit comporte en outre une quatrième résistance de faible valeur montée en série avec une diode Zener entre le drain et la source du transistor limiteur, le point-milieu de l'association en série de la quatrième résistance avec la diode Zener étant reliée à une deuxième borne de la première résistance.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente un circuit classique de redressement et d'alimentation de charge ;
les figures 2A et 2B représentent des courbes de tension et de courant correspondant aux schémas de la figure 1 ;
la figure 3 représente un schéma simplifié d'un premier mode de réalisation de la présente invention ;
les figures 4A à 4D représentent des courbes de tension et de courant correspondant au schéma de la figure 3 ;
la figure 5 représente un exemple de schéma détaillé du premier mode de réalisation de la présente invention ;
la figure 6 représente des courbes de tension correspondant au schéma de la figure 5
la figure 7 représente un deuxième exemple de schéma détaillé du premier mode de réalisation de la présente invention ;
la figure 8 représente un schéma simplifié d'un deuxième mode de réalisation de la présente invention ;
la figure 9 représente un exemple de schéma détaillé du deuxième mode de réalisation de la présente invention ; et
les figures 10A et 10B représentent des courbes de tension et de courant correspondant au schéma de la figure 9.

Les mêmes éléments ont été désignés par les mêmes références aux différentes figures. Pour des raisons de clarté, seuls les éléments nécessaires à la compréhension de l'invention ont été représentés aux figures et les courbes de tension et de courant ne sont pas à l'échelle.

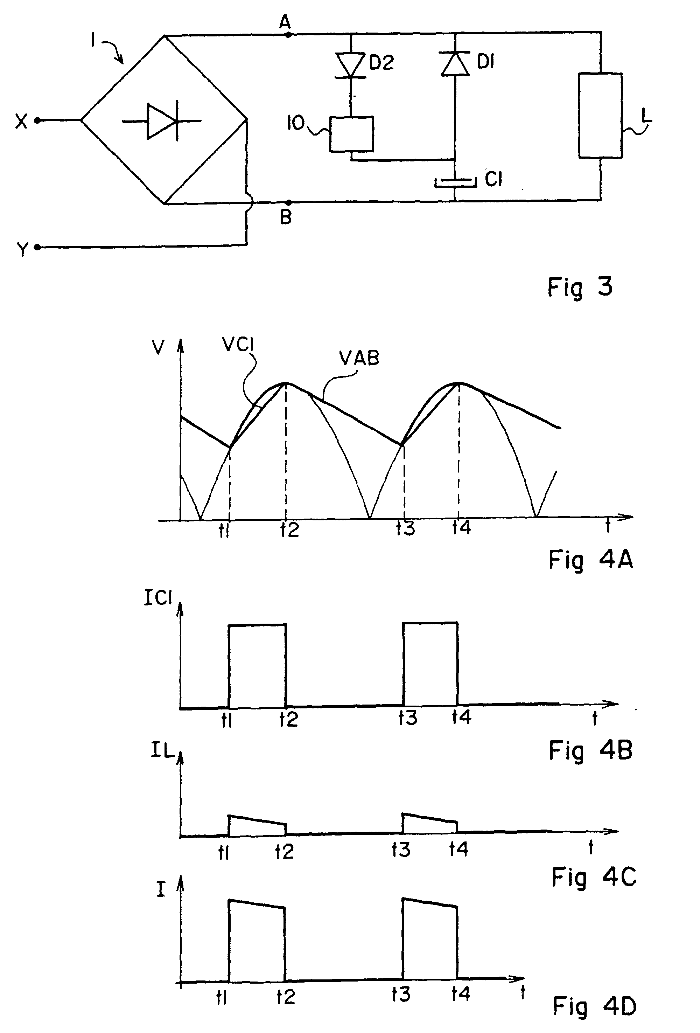

La figure 3 représente un premier mode de réalisation de la présente invention selon lequel une charge L, par exemple une alimentation à découpage, est connectée directement aux bornes de sortie d'un pont redresseur.

La figure 3 représente un pont redresseur 1 muni de bornes d'entrée X et Y et de bornes de sortie redressée A et B, un condensateur de stockage C1 et une charge L. Le condensateur C1 est associé à un trajet de décharge défini par une diode D1 et à un trajet de charge défini par une diode D2. Un limiteur de courant 10 est inséré dans le trajet de charge.

Au sens de la présente invention, le limiteur de courant 10 est un élément actif limitant le courant dans le trajet de charge du condensateur C1 à une valeur déterminée, sensiblement constante, et commandable.

Ainsi, si l'on se place dans des conditions similaires à celles de la figure 1, on obtient une allure de la tension V_{AB} sensiblement identique. Toutefois, comme le représente la figure 4A, le condensateur C1 étant chargé à courant constant en raison de la présence du limiteur de courant 10, la tension V_{C1} à ses bornes varie linéairement. Le condensateur arrête de se charger pour prendre le relais de la tension d'alimentation à l'instant t2 où V_{AB} devient inférieur à V_{C1}.

La figure 4B représente le courant I_{C1} dans le condensateur C1 pendant les périodes de charge. Ce courant est constant en raison de la présence du limiteur de courant 10.

La figure 4C représente le courant I_{L} dans la charge pendant les périodes t1-t2 et t3-t4. Ce courant est fourni par la tension du secteur redressée. Étant donné qu'on a considéré le cas d'une alimentation régulée, la puissance dans la charge est constante. Comme, pendant les périodes t1-t2 et t3-t4, la tension V_{AB} est croissante, le courant dans la charge sera décroissant. Bien entendu, il circule aussi un courant dans la charge en dehors des périodes t1-t2 et t3-t4. Ce courant, fourni par la charge du condensateur C1, n'a pas été représenté puisque l'on veut seulement expliquer ici l'allure du courant fourni par le secteur, qui est nul en dehors des périodes t1-t2 et t3-t4.

La figure 4D illustre le courant total extrait de l'alimentation redressée pendant les périodes t1-t2 et t3-t4. Ce courant I est la superposition des courants I_{L} et I_{C1}, c'est-à-dire que chaque pic de courant présente un maximum à l'instant t1 et décroît jusqu'à l'instant t2.

Ainsi, à la différence d'une résistance qui serait insérée dans le trajet de charge et qui, tout en limitant le courant de charge du condensateur, maintiendrait un pic de courant symétrique et en forme d'arche de sinusoïde, le limiteur de courant de la présente invention rend le courant de charge du condensateur C1 sensiblement constant pour rendre les pics de courant I extraits de l'alimentation redressée quasi constants mais dissymétriques pendant les périodes de charge du condensateur C1.

On pourrait montrer que, pour une même charge, étant donné que l'alimentation se fait à courant constant et non selon une portion de sinusoïde ou de parabole, la valeur maximum du courant I_{C1} est sensiblement les deux tiers de la valeur maximum du courant de crête en figure 2B. C'est là un premier avantage de la présente invention, un autre avantage étant, comme cela a été indiqué précédemment, que le courant total I est dissymétrique et présente un maximum initial. Un troisième avantage de la présente invention est qu'il n'est plus utile de prévoir une résistance de limitation du courant d'appel à la mise sous tension.

Le circuit de la figure 3 présente toutefois un inconvénient pratique notable à savoir que, pour les explications précédentes, on s'est placé dans le cas où le circuit de la figure 3 fournit les mêmes résultats que celui de la figure 1, c'est-à-dire que l'on a supposé que le limiteur de courant était réglé à une valeur optimale. En pratique, il n'est pas possible de choisir ce courant optimal qui dépend des valeurs du condensateur C1 et de la charge L. La présente invention prévoit donc un tel circuit dans lequel le limiteur de courant s'adapte de façon automatique aux paramètres du circuit (valeurs de C1 et de L).

Une caractéristique de la présente invention est que le limiteur de courant est commandé en fonction du signal prélevé sur le redresseur 1 et ne nécessite aucun signal de commande provenant de la charge L. Ainsi, le circuit d'alimentation est, selon la présente invention, indépendant du type de charge alimenté et peut être intercalé dans un circuit classique entre un pont redresseur et une charge, par exemple une alimentation à découpage, sans qu'il soit nécessaire d'apporter de modifications à la charge classique pour en prélever un signal de commande.

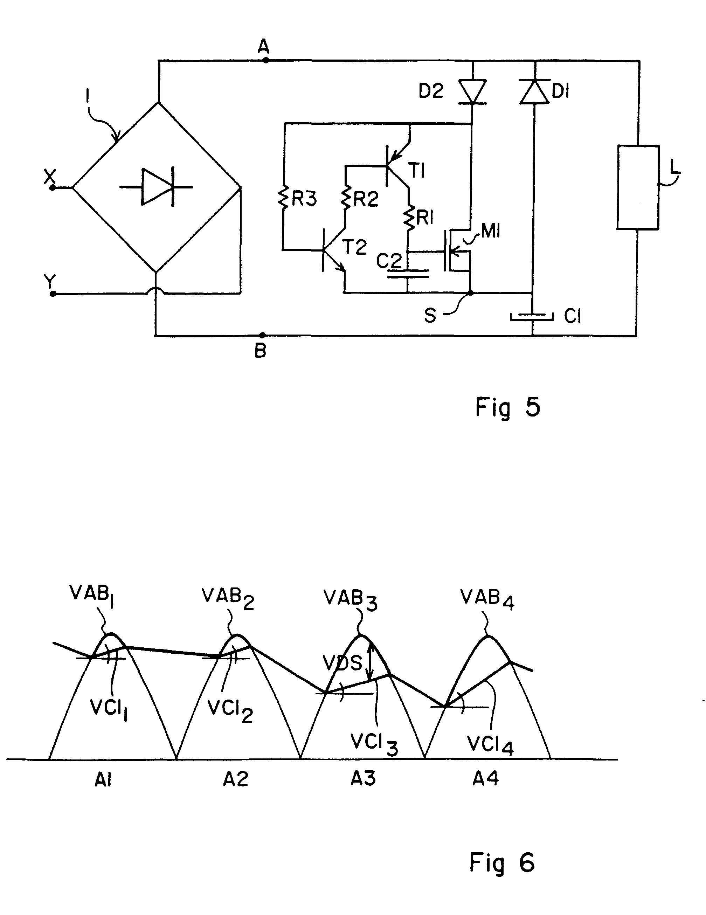

La figure 5 représente un premier exemple de schéma détaillé du premier mode de réalisation de l'invention dans lequel un redresseur double alternance 1 alimente une charge L et est associé à un condensateur C1 par l'intermédiaire d'un trajet de décharge fixé par une diode D1 et d'un trajet de charge fixé par une diode D2.

Dans ce mode de réalisation, le limiteur du courant du trajet de charge est réalisé sous forme d'un transistor MOS à canal N à enrichissement M1. Il est connu qu'un tel composant fonctionne en limiteur de courant si sa tension grille-source est fixée à une valeur constante, la valeur de limitation augmentant avec la tension grille-source. La présente invention prévoit de polariser la grille du transistor M1 par un condensateur C2 chargé, avec une constante de temps longue, à une tension qui correspond sensiblement à la tension drain-source du transistor M1. Pour cela, la grille du transistor M1 est, dans ce premier exemple, reliée, par l'intermédiaire d'une résistance R1 de forte valeur et d'un interrupteur T1, au drain de ce transistor M1. L'interrupteur T1, réalisé dans le mode de réalisation représenté par un transistor bipolaire de type PNP, est fermé pendant les périodes de charge du condensateur C1 et ouvert pendant les périodes de décharge.

Pendant qu'un courant circule dans le transistor M1, sa tension de drain est égale à la tension secteur V_{AB} moins la chute de tension aux bornes de la diode D2 polarisée en direct et sa tension de source est égale à la tension sur le condensateur C1, qui croît selon une rampe linéaire, comme cela est représenté en figures 4.

La figure 6 représente plusieurs alternances successives A1, A2, A3, A4 de la tension du secteur redressée et correspond à la figure 4A. On suppose qu'au cours des deux premières alternances A1 et A2 la recharge du condensateur C1 équilibre parfaitement la décharge de ce condensateur pendant les périodes où celui-ci alimente la charge, ce qui correspond à ce qui est représenté à la figure 4. On suppose ensuite qu'à partir de l'alternance A3 la puissance requise par la charge L augmente. Alors, si la pente de la recharge du condensateur C1, qui correspond au courant limité imposé par le transistor M1, n'est pas modifiée, comme on le voit au cours de l'alternance A3, la recharge du condensateur C1 devient insuffisante. Toutefois, comme on l'a indiqué précédemment, la tension drain-source V_{DS} du transistor M1 est, à tout instant d'une période de charge, égale à V_{AB} - V_{C1}. Cette valeur augmente fortement au cours de l'alternance A3. En conséquence, la tension intégrée stockée dans le condensateur C2 augmente, c'est-à-dire que la tension de grille V_{GS} du transistor M1 augmente et que la valeur du courant limité imposé par le transistor M1 augmente. Ainsi, au cours de l'alternance A4, la charge du condensateur C1 est plus rapide que précédemment et l'on revient au bout de quelques alternances à une situation d'équilibre. Bien entendu, alors que l'on a présenté en figure 6 un retour très rapide à l'équilibre, il sera clair qu'en pratique la constante de temps R1C2 sera choisie pour que le retour à l'équilibre soit plus progressif.

Un exemple de commande du transistor PNP T1 pour le rendre passant (de façon bidirectionnelle) pendant les périodes de charge du condensateur C1 consiste à relier la base de ce transistor T1 à la borne de source S du transistor M1 par l'intermédiaire de la connexion en série d'une résistance R2 et d'un transistor NPN T2. La base du transistor T2 est reliée à l'émetteur du transistor T1 par une résistance R3. Ainsi, le transistor T2 devient passant dès que la tension entre les bornes A et B devient supérieure à la tension aux bornes du condensateur C1 (plus les chutes de tension dans la diode D2 en direct et dans la jonction base-émetteur de ce transistor T2) et la mise en conduction du transistor T2 entraîne la mise en conduction du transistor T1, d'où il résulte que le condensateur C2 est susceptible de se recharger ou de se décharger pour adapter sa tension à la chute de tension aux bornes du transistor M1.

Dans un mode de réalisation particulier, on pourra adopter pour les divers composants les valeurs suivantes :
C2 = 0,1 µF,
R1 = 200 kohms à 1 Mohms (de sorte que R1.C2 > 20 ms),
R2 = 4,7 Mohms, et
R3 = 100 kohms.

La largeur du pic de courant sera déterminée de façon classique par la relation entre la capacité du condensateur C1 et la demande de puissance de la charge L.

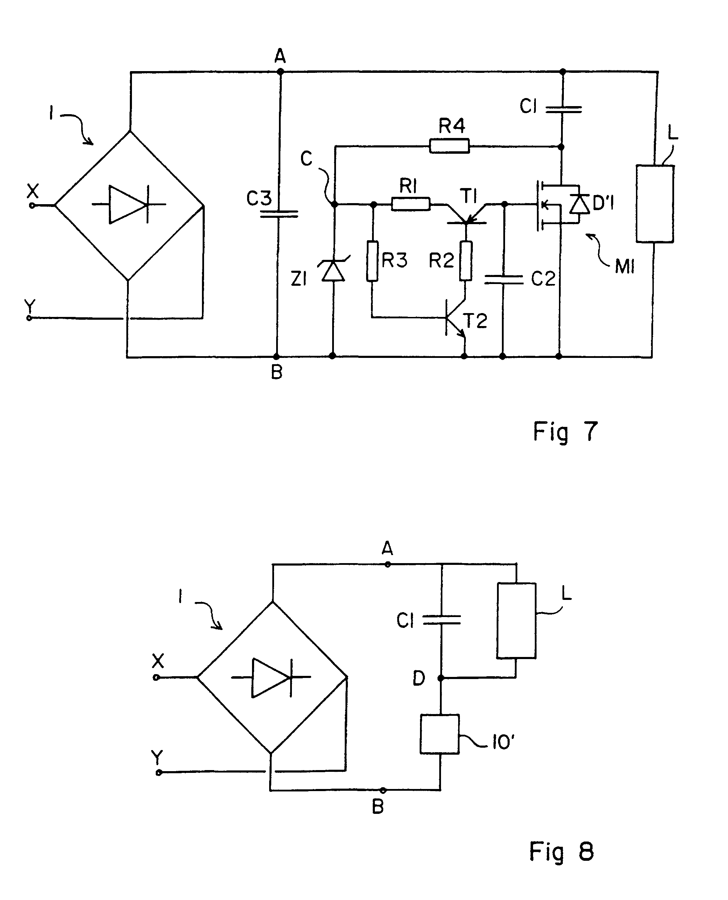

La figure 7 représente un deuxième exemple de schéma détaillé du premier mode de réalisation de l'invention.

Selon ce deuxième exemple, les positions respectives du condensateur C1 et du limiteur de courant de charge ont été inversées, c'est-à-dire qu'une première borne du condensateur C1 est relié à la borne A et tandis qu'une deuxième borne du condensateur C1 est reliée, par l'intermédiaire du transistor M1 monté en série, à la borne B. Une telle modification n'a pas de conséquence sur le principe décrit en relation avec la figure 5.

Dans l'exemple de la figure 7, la diode (D2, figures 3 et 5) intercalée sur le trajet de charge a été supprimée. En effet, le rôle de cette diode peut être joué par les diodes du pont de redressement 1. Un avantage d'une telle suppression est que le transistor MOS de puissance à canal N peut alors être utilisé à la fois pour la charge et pour la décharge du condensateur C1 et que la diode (D1, figures 3 et 5) du chemin de décharge peut être supprimée. En effet, le rôle de cette diode peut alors être joué par la diode D'1 interne au transistor MOS M1. On veillera simplement à ce que cette diode D'1 soit suffisamment rapide dans le cas où la charge L est constituée d'une alimentation à découpage, dans la mesure où le courant traversant le transistor MOS, hors de périodes de charge du condensateur C1, est alors à la fréquence de l'alimentation à découpage.

La commande automatique du transistor M1 est toujours assurée par un condensateur C2 chargé, avec une constante de temps longue, à une tension qui est fonction de la tension drain-source du transistor M1. Ici, la grille du transistor M1 est reliée, par l'intermédiaire d'un transistor bipolaire de type PNP T1 et d'une résistance R1 de forte valeur, au point-milieu C d'une association en série d'une résistance R4 et d'une diode Zener Z1 entre la deuxième borne du condensateur C1 et la borne B. Le transistor T1 joue toujours le rôle d'un interrupteur qui est fermé pendant les périodes de charge du condensateur C1 et ouvert pendant les périodes de décharge. La commande du transistor T1 pour le rendre passant (de façon bidirectionnelle) pendant les périodes de charge du condensateur C1 consiste, par exemple, à relier la base de ce transistor T1 à la borne de source du transistor M1 (borne B) par l'intermédiaire de la connexion en série d'une résistance R2 et d'un transistor NPN T2. La base du transistor T2 est reliée au point C par une résistance R3. Ainsi, le transistor T2 devient passant dès que la tension entre les bornes A et B devient supérieure à la tension aux bornes du condensateur C1 (plus les chutes de tension dans les résistances R4 et R3 et dans la jonction base-émetteur du transistor T2) et la mise en conduction du transistor T2 entraîne la mise en conduction du transistor T1, le condensateur C2 pouvant alors, comme dans le premier exemple, se recharger ou se décharger pour adapter sa tension à la chute de tension aux bornes du transistor M1.

Dans cet exemple, les résistances R1 (+R4) et R2 constituent un pont diviseur de la tension drain-source V_{DS} du transistor M1. Leur dimensionnement dépend de la tension seuil du transistor MOS M1 dans la plage de courant de fonctionnement à laquelle est destiné le circuit de limitation, afin d'obtenir aux bornes du condensateur C2 un rapport de la valeur moyenne de la tension V_{DS} adapté à la rapidité (pente V_{C14} en figure 6) avec laquelle on souhaite que le condensateur C1 retrouve son niveau de charge initial suite à une variation de la puissance requise par la charge L.

Le rôle de la diode Zener Z1 et de la résistance R4 est de protéger le transistor M1 lors de la mise sous tension du circuit alors que le condensateur C1 n'est pas encore chargé et que le transistor M1 supporte la tension V_{AB}. En l'absence de la diode Z1, la grille du transistor M1 se trouverait rapidement à un potentiel élevé par rapport à sa source, ce qui engendrerait un fort courant drain-source et un risque de claquage de la grille. La diode Z1 coopère avec la résistance R1 et le condensateur C2 pour que l'augmentation de la tension de grille du transistor M1 soit progressive à la mise sous tension et n'atteigne pas de valeurs préjudiciables pour le transistor M1. Ainsi, le transistor M1 est protégé alors même que le circuit est dépourvu de résistance de limitation du courant d'appel en sortie du pont redresseur. La diode Zener Z1 est dimensionnée pour supporter plusieurs centaines de milliampères pendant quelques périodes du secteur, le temps que le condensateur C1 se charge. La résistance R4 présente de préférence une faible valeur pour ne pas introduire une chute de tension trop importante qui retarderait la mise en conduction du transistor T2. En étant de faible valeur, la résistance R4 n'introduit pas de chute de tension entre la sortie du redresseur et la charge L.

On notera que la diode Z1 et la résistance R4 sont également prévues (bien que non représentées) dans l'exemple de réalisation de la figure 5.

A la figure 7, on a représenté un condensateur additionnel C3 connecté entre les bornes de sortie du redresseur. Le condensateur C3 joue le rôle d'un filtre et est nécessaire (également dans l'exemple de la figure 5), dans le cas où la charge L est constituée d'une alimentation à découpage, pour éviter de réinjecter des parasites à haute fréquence sur le secteur pendant les phases de charge du condensateur C1 (alors que la charge L reçoit son énergie directement du secteur).

A titre d'exemple particulier de réalisation, on pourra adopter pour les divers composants, les valeurs suivantes :
C1 = 33 µF,
C2 = 2,2 µF,
C3 = 1 µF, 400 V,
R1 = R2 = 100 kohms,
R3 = 47 kohms,
R4 = 4,7 kohms, et
V_{Z1} = 24 V.

La figure 8 représente un schéma simplifié d'un deuxième mode de réalisation de la présente invention.

Une caractéristique de ce deuxième mode de réalisation est que la charge L n'est plus connectée entre les bornes A et B de sortie du pont redresseur 1 mais est connectée entre les bornes A et D du condensateur C1, la borne D étant reliée à la borne B par l'intermédiaire d'un dispositif limiteur de courant 10'. Ce deuxième mode de réalisation de l'invention est plus particulièrement destiné à une charge L constituée d'une alimentation à découpage où il présente l'avantage d'éviter le recours à un condensateur de filtrage (C3, figure 7) en sortie du pont redresseur. En effet, le filtrage des parasites à haute fréquence liés à l'alimentation à découpage est ici directement assuré par le condensateur de stockage C1.

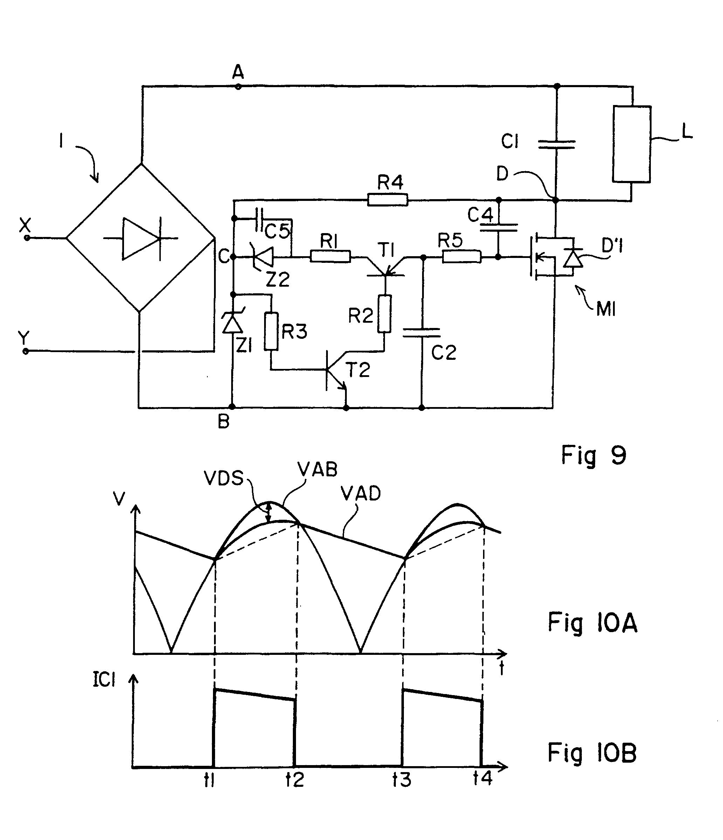

La figure 9 représente un exemple de schéma détaillé d'un circuit d'alimentation selon ce deuxième mode de réalisation.

Le limiteur de courant 10' est, comme dans le premier mode de réalisation, constitué d'un transistor MOS à canal N à enrichissement M1 et, comme dans l'exemple de la figure 7, on utilise la diode interne D'1 de ce transistor M1 pour constituer le chemin de décharge du condensateur C1.

La commande du transistor M1 est effectuée au moyen d'un montage reprenant l'essentiel du circuit représenté à la figure 7. Seules les différences par rapport à ce montage de la figure 7 seront exposées par la suite.

Selon le deuxième mode de réalisation, une résistance R5 est intercalée entre l'émetteur du transistor T1 jouant le rôle d'interrupteur et la grille du transistor M1, et un condensateur C4 relie la grille et le drain D du transistor M1. Le rôle de la cellule R5-C4 est de provoquer une polarisation de la grille du transistor M1, non plus seulement de la valeur moyenne de sa tension drain-source, mais en ajoutant la dérivée de cette tension drain-source.

La figure 10A représente, en fonction du temps, la tension du secteur redressée V_{AB} et la tension V_{AD} aux bornes du condensateur de stockage C1. La figure 10B représente le courant I_{C1} dans le condensateur C1 pendant les périodes de charge.

Tout en étant sensiblement constant, le courant I_{C1} présente une légère décroissance entre les instants t1 et t2 et entre les instants t3 et t4 où la tension V_{AB} est supérieure à la tension aux bornes du condensateur. Cette décroissance est due à la dérivée de la tension drain-source du transistor M1 apportée par la cellule R5-C4.

Un avantage de ce mode de réalisation est que, comme l'illustre la figure 10A, la tension V_{AD} est plus proche de la tension V_{AB} pendant les périodes de charge que dans le premier mode de réalisation. Ainsi, on minimise la consommation du circuit d'alimentation dans la mesure où la dissipation de puissance dans le transistor M1 est proportionnelle à sa chute de tension drain-source V_{DS}.

On notera que le courant total (non représenté) extrait de l'alimentation redressée pendant les périodes t1-t2 et t3-t4 est toujours dissymétrique et présente toujours un maximum initial.

En pratique, on prévoira de préférence une diode Zener Z2 entre la résistance R1 et l'anode de la diode Zener Z1 (point C) à laquelle est reliée la résistance R3, un condensateur C5 étant associé en parallèle à cette diode Zener Z2. Les résistances R1 et R2 pourront alors, le cas échéant, être dimensionnées pour que le rapport du pont diviseur qu'elles constituent soit sensiblement égal à 1. En effet, la diode Z2 ajoute une tension à celle de la grille du transistor M1 pour que la tension de grille du transistor M1 soit sensiblement constante et que la tension V_{DS} moyenne pendant la conduction soit supérieure à cette tension de grille et sensiblement égale à la tension V_{GS}. Le rôle du condensateur C5 est de maintenir la tension dans la mesure où la diode Z2 n'est pas toujours traversée par un courant.

Bien entendu, la présente invention est susceptible de diverses variantes et modifications qui apparaîtront à l'homme de l'art, notamment, en ce qui concerne la réalisation du limiteur de courant, la réalisation d'un circuit de commande ayant pour fonction d'ajuster la chute de tension aux bornes de ce limiteur de courant à une valeur optimale, et la réalisation d'un circuit permettant de valider le circuit de commande seulement pendant les phases de charge du condensateur C1.

De plus, l'homme de l'art, quand il voudra obtenir un pic de courant dissymétrique dans des systèmes de correction de facteur de puissance connu, pourra dans de nombreux cas combiner la présente invention à de tels systèmes connus.

## Revendications

1. Circuit d'alimentation à condensateur de stockage comprenant, aux bornes d'un pont redresseur (1), un condensateur de stockage (C1) en série avec des chemins de charge et de décharge parallèles, **caractérisé en ce que** le chemin de charge comprend un limiteur de courant (10, 10') dont la valeur de limitation est commandée par un moyen mémorisant la tension moyenne aux bornes du limiteur, d'où il résulte que le condensateur de stockage (C1) se charge, pendant chacune de ses phases de charge, à un courant sensiblement constant dépendant de cette tension moyenne.

2. Circuit selon la revendication 1, **caractérisé en ce que** le limiteur de courant est un transistor MOS à enrichissement à canal N (M1) associé à des moyens de polarisation de grille.

3. Circuit selon la revendication 2, **caractérisé en ce que** les moyens de polarisation de grille comprennent des moyens (C2) de mémorisation d'une tension fonction de la tension entre le drain et la source du transistor MOS (M1), la constante de temps de ces moyens de mémorisation étant longue devant la période des signaux d'entrée du pont redresseur.

4. Circuit selon la revendication 3, **caractérisé en ce que** les moyens de polarisation de grille comprennent la connexion en série, entre le drain et la source du transistor limiteur (M1), d'un interrupteur bidirectionnel (T1) commandé à la fermeture pendant les périodes de charge, d'au moins une première résistance (R1) et d'un deuxième condensateur (C2), le deuxième condensateur constituant lesdits moyens de mémorisation.

5. Circuit selon la revendication 4, **caractérisé en ce que** l'interrupteur (T1) est un premier transistor bipolaire de type PNP.

6. Circuit selon la revendication 5, **caractérisé en ce que** les moyens de commande de l'interrupteur comprennent une deuxième résistance (R2) connectée à la base du premier transistor bipolaire (T1), un deuxième transistor bipolaire (T2) de type NPN connecté entre la deuxième résistance et la source du transistor limiteur (M1), et une troisième résistance (R3) connectée entre la base du deuxième transistor bipolaire (T2) et un potentiel voisin de celui du drain du transistor limiteur (M1).

7. Circuit selon la revendication 6, dans lequel une charge (L) est connectée aux bornes (A, B) de sortie du pont redresseur (1), **caractérisé en ce que** le deuxième condensateur (C2) est connecté entre grille et source du transistor limiteur (M1).

8. Circuit selon la revendication 7, **caractérisé en ce que** la première résistance (R1) est de forte valeur et est intercalée entre la grille du transistor limiteur (M1) et le collecteur du premier transistor bipolaire (T1), une borne de la troisième résistance (R3) et l'émetteur du premier transistor bipolaire étant reliés au drain du transistor limiteur, d'où il résulte que le deuxième condensateur (C2) mémorise une tension correspondant sensiblement à la tension moyenne entre le drain et la source du transistor limiteur.

9. Circuit selon la revendication 6, **caractérisé en ce qu'**une première borne de la première résistance (R1) est reliée au collecteur du premier transistor bipolaire (T1), l'émetteur du premier transistor bipolaire étant relié à une première borne du deuxième condensateur (C2) dont une deuxième borne est reliée à la source du transistor limiteur (M1).

10. Circuit selon la revendication 9, **caractérisé en ce qu'**une charge (L) est connectée aux bornes du condensateur de stockage (C1), les moyens de polarisation de grille comprenant en outre une cinquième résistance (R5) connectée entre l'émetteur du premier transistor bipolaire (T1) et la grille du transistor limiteur (M1), et un troisième condensateur (C4) connecté entre le drain et la grille du transistor limiteur, d'où il résulte que la grille du transistor limiteur est polarisée par une tension correspondant à la somme d'une première tension proportionnelle à la tension entre le drain et la source du transistor limiteur et d'une deuxième tension proportionnelle à la dérivée de la tension entre le drain et la source du transistor limiteur.

11. Circuit selon la revendication 9, **caractérisé en ce qu'**il comporte en outre une quatrième résistance (R4) de faible valeur montée en série avec une diode Zener (Z1) entre le drain et la source du transistor limiteur (M1), le point-milieu de l'association en série de la quatrième résistance avec la diode Zener étant reliée à une deuxième borne de la première résistance (R1).

## Claims

1. A supply circuit having a storage capacitor, including, across a rectifying bridge (1), a storage capacitor (C1) in series with parallel charge path and discharge paths, **characterized in that** the charge path includes a current limiter (10, 10') the limitation value of which is controlled by a means controlling the average voltage across the limite, whereby the storage capacitor (C1) charges during each of its charge phases with a substantially constant current depending upon this average voltage.

2. A circuit according to claim 1, **characterized in that** the current limiter is an N-channel MOS enrichment transistor (M1) associated with gate biasing means.

3. A circuit according to claim 2, **characterized in that** the gate biasing means include means (C2) for storing a voltage which is a function of the voltage between the drain and the source of the MOS transistor (M1), the time constant of these storage means being long with respect to the period of the input signals of the rectifying bridge.

4. A circuit according to claim 3, **characterized in that** the gate biasing means include the series connection, between the drain and the source of the limiting transistor (M1), of a bidirectional switch (T1) controlled to be closed during charge periods, of at least a first resistor (R1) and of a second capacitor (C2), the second capacitor forming the storage means.

5. A circuit according to claim 4, **characterized in that** the switch (T1) is a first bipolar transistor of PNP type.

6. A circuit according to claim 5, **characterized in that** the switch control means include a second resistor (R2) connected to the base of the first bipolar transistor (T1), a second bipolar transistor (T2) of NPN type connected between the second resistor and the source of the limiting transistor (M1), and a third resistor (R3) connected between the base of the second bipolar transistor (T2) and a potential close to that of the drain of the limiting transistor (M1).

7. A circuit according to claim 6, in which a load (L) is connected to the output terminals (A, B) of the rectifying bridge (1), **characterized in that** the second capacitor (C2) is connected between the gate and the source of the limiting transistor (M1).

8. A circuit according to claim 7, **characterized in that** the first resistor (R1) is of high value and is interposed between the gate of the limiting transistor (M1) and the collector of the first bipolar transistor (T1), a terminal of the third resistor (R3) and the emitter of the first bipolar transistor being connected to the drain of the limiting transistor, whereby the second capacitor (C2) stores a voltage substantially corresponding to the mean voltage between the drain and the source of the limiting transistor.

9. A circuit according to claim 6, **characterized in that** a first terminal of the first resistor (R1) is connected to the collector of the first bipolar transistor (T1), the emitter of the first bipolar transistor being connected to a first terminal of the second capacitor (C2), a second terminal of which is connected to the source of the limiting transistor (M1).

10. A circuit according to claim 9, **characterized in that** a load (L) is connected across the storage capacitor (C1), the gate biasing means further including a fifth resistor (R5) connected between the emitter of the first bipolar transistor (T1) and the gate of the limiting transistor (M1), and a third capacitor (C4) connected between the drain and the gate of the limiting transistor, whereby the gate of the limiting transistor is biased by a voltage corresponding to the sum of a first voltage proportional to the voltage between the drain and the gate of the limiting transistor and of a second voltage proportional to the derivative of the voltage between the drain and the source of the limiting transistor.

11. A circuit according to claim 9, **characterized in that** it further includes a fourth resistor (R4) of low value mounted in series with a zener diode (Z1) between the drain and the source of the limiting transistor (M1), the midpoint of the series association of the fourth resistor with the zener diode being connected to a second terminal of the first resistor (R1).

## Patentansprüche

1. Versorgungsschaltung mit einem Speicherkondensator, die an den Anschlüssen einer Gleichrichterbrücke (1) einen Speicherkondensator (C1) in Serie mit einer Parallelschaltung eines Lade- und eines Entladeweges aufweist, **dadurch gekennzeichnet, dass** der Ladeweg einen Strombegrenzer (10, 10') aufweist, dessen Grenzwert durch eine die mittlere Spannung an den Anschlüssen des Begrenzers speichernde Einrichtung gesteuert wird, wodurch der Speicherkondensator (C1) während jeder seiner Ladephasen mit einem im wesentlichen konstanten Strom in Abhängigkeit dieser mittleren Spannung geladen wird.

2. Schaltung nach Anspruch 1, **dadurch gekennzeichnet, dass** der Strombegrenzer ein N-Kanal-MOS-Transistor vom Anreichungstyp (M1) ist, dem Vorspannungseinrichtungen für die Gate-Elektrode zugeordnet sind.

3. Schaltung nach Anspruch 2, **dadurch gekennzeichnet, dass** die Vorspannungseinrichtungen für die Gate-Elektrode Einrichtungen (C2) zum Speichern einer Spannung aufweist, die eine Funktion der Spannung zwischen der Drain-Elektrode und der Source-Elektrode des MOS-Transistors (M1) ist, wobei die Zeitkonstante dieser Speichereinrichtungen in Hinblick auf die Periode der Eingangssignale der Gleichrichterbrücke lang ist.

4. Schaltung nach Anspruch 3, **dadurch gekennzeichnet, dass** die Vorspannungseinrichtungen für die Gate-Elektrode zwischen der Drain-Elektrode und der Source-Elektrode des Begrenzertransistors (M1) eine Serienschaltung aus einem bidirektionalem Schalter (T1), der während der Ladeperioden in den Schließzustand gesteuert wird, aus mindestens einem ersten Widerstand (R1) und einem zweiten Kondensator (C2) besteht, wobei der zweite Kondensator die besagten Speichereinrichtungen bildet.

5. Schaltung nach Anspruch 4, **dadurch gekennzeichnet, dass** der Schalter (T1) ein erster bipolarer Transistor vom PNP-Typ ist.

6. Schaltung nach Anspruch 5, **dadurch gekennzeichnet, dass** die Steuereinrichtungen für den Schalter einen zweiten Widerstand (R2), der mit der Basis des ersten bipolaren Transistors (T1) verbunden ist, einen zweiten bipolaren Transistor (T2) vom NPN-Typ, der zwischen den zweiten Widerstand und die Source-Elektrode des Begrenzertransistors (M1) geschaltet ist, und einen dritten Widerstand (R3) aufweisen, der zwischen die Basis des zweiten bipolaren Transistors (T2) und einen Punkt mit einem Potential geschaltet ist, das nahe demjenigen der Drain-Elektrode des Begrenzertransistors (M1) ist.

7. Schaltung nach Anspruch 6, bei der eine Last (L) mit den Ausgangsanschlüssen (A, B) der Gleichrichterbrücke (1) verbunden ist, **dadurch gekennzeichnet, dass** der zweite Kondensator (C2) zwischen die Gate-Elektrode und die Source-Elektrode des Begrenzertransistors (M1) geschaltet ist.

8. Schaltung nach Anspruch 7, **dadurch gekennzeichnet, dass** der erste Widerstand (R1) einen hohen Wert aufweist und zwischen die Gate-Elektrode des Begrenzertransistors (M1) und den Kollektor des ersten bipolaren Transistors (T1) geschaltet ist, wobei ein Anschluss des dritten Widerstandes (R3) und der Emitter des ersten bipolaren Transistors mit der Drain-Elektrode des Begrenzertransistors verbunden sind, wodurch der zweite Kondensator (C2) eine Spannung speichert, die im wesentlichen der mittleren Spannung zwischen der Drain-Elektrode und der Source-Elektrode des Begrenzertransistors entspricht.

9. Schaltung nach Anspruch 6, **dadurch gekennzeichnet, dass** ein erster Anschluss des ersten Widerstandes (R1) mit dem Kollektor des ersten bipolaren Transistors (T1) verbunden ist, und dass der Emitter des ersten bipolaren Transistors mit einem ersten Anschluss des zweiten Kondensators (C2) verbunden ist, dessen zweiter Anschluss mit der Source-Elektrode des Begrenzertransistors (M1) verbunden ist.

10. Schaltung nach Anspruch 9, **dadurch gekennzeichnet, dass** eine Last (L) mit den Anschlüssen des Speicherkondensators (C1) verbunden ist, dass die Vorspannungseinrichtungen für die Gate-Elektrode zusätzlich einen fünften Widerstand (R5), der zwischen den Emitter des ersten bipolaren Transistors (T1) und die Gate-Elektrode des Begrenzertransistors (M1) geschaltet ist, und einen dritten Kondensator (C4) aufweisen, der zwischen die Drain-Elektrode und die Gate-Elektrode des Begrenzertransistors geschaltet ist, wodurch die Gate-Elektrode des Begrenzertransistors mit einer Spannung vorgespannt wird, die der Summe einer ersten zu der Spannung zwischen der Drain-Elektrode und der Source-Elektrode des Begrenzertransistors proportionalen Spannung und einer zweiten Spannung entspricht, die proportional zu der Ableitung der Spannung zwischen der Drain-Elektrode und der Source-Elektrode des Begrenzertransistors ist.

11. Schaltung nach Anspruch 9, **dadurch gekennzeichnet, dass** sie zusätzlich einen vierten Widerstand (R4) mit kleinem Wert aufweist, der in Serie mit einer Zener-Diode (Z1) zwischen die Drain-Elektrode und die Source-Elektrode des Begrenzertransistors (M1) geschaltet ist, wobei der Mittelpunkt der Serienschaltung aus dem vierten Widerstand und der Zener-Diode mit einem zweiten Anschluss des ersten Widerstandes (R1) verbunden ist.
